# EUROPÄISCHE PATENTSCHRIFT

(11) **EP 2 746 625 B1**
(45) Veröffentlichungstag und Bekanntmachung des Hinweises auf die Patenterteilung: **23.11.2016**
(21) Anmeldenummer: 12199115.2
(22) Anmeldetag: 21.12.2012
(51) Int. Cl.: F16J 15/02, F16J 15/32

(54) **Dichtung zwischen statischen Bauteilen, insbesondere thermisch belasteten Bauteilen einer Turbine, sowie Dichtungsanordnung**
Seal between static components, in particular thermally loaded components of a turbine, and sealing assembly
Étanchéité entre des composants statiques, en particulier des composants chargés thermiquement d'une turbine, ainsi qu'agencement d'étanchéité

(43) Veröffentlichungstag der Anmeldung: 25.06.2014
(73) Patentinhaber: General Electric Technology GmbH, 5400 Baden (CH)
(72) Erfinder: Vogt, Ernst, 5236 Remigen (CH); Peter, Roman Stefan, 5274 Mettau (CH); Lopez, Jose-Manuel, 5073 Gipf-Oberfrick (CH); Nait-Atmane, Mohand, 5406 Baden (CH)
(74) Vertreter: General Electric Technology GmbH

(56) Entgegenhaltungen:
- EP-A1- 1 510 736
- EP-A2- 1 378 690
- DE-A1- 3 923 988
- DE-A1-102009 030 950

## Beschreibung

### Technisches Gebiet

Die vorliegende Erfindung betrifft ein Dichtungselement zur Abdichtung eines Spalts zwischen statischen Bauteilen, wobei diese Bauteile einer thermischen Beanspruchung ausgesetzt sind und infolge wechselnder thermischer Beanspruchungen Relativbewegungen zueinander ausführen, die zu einer Änderung der Spaltgeometrie, insbesondere einer Spaltaufweitung, führen.

Die vorliegende Erfindung betrifft außerdem eine Dichtungsanordnung zwischen thermisch belasteten statischen Bauteilen unter Anwendung eines solchen Dichtungselements.

Ein bevorzugtes Anwendungsgebiet des Dichtungselements sowie der Dichtungsanordnung sind thermischen Wechselbeanspruchungen ausgesetzte Flanschverbindungen zwischen Komponenten einer Gasturbinenanlage, beispielsweise ein Kreuzflansch zur Anbindung einer Brennkammer und eine Gasturbine.

### Stand der Technik

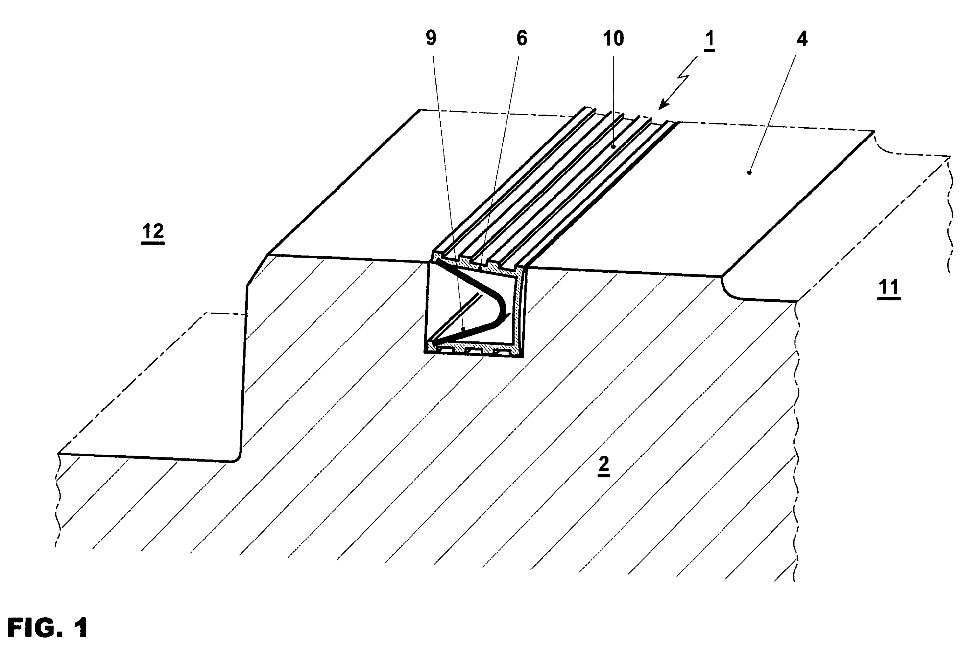

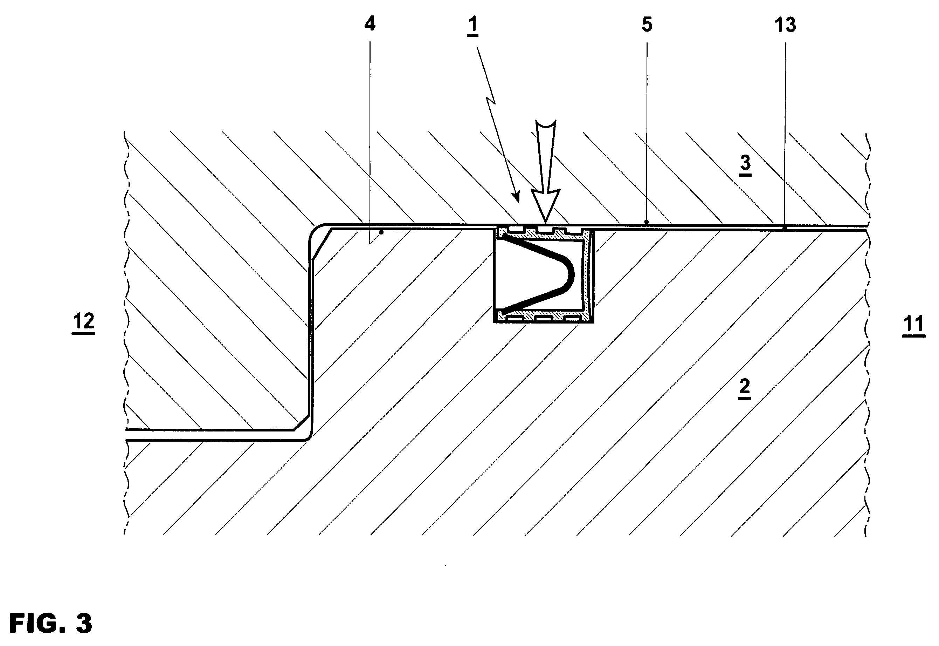

Dichtungen zum Eindämmen von Leckströmungen zwischen benachbarten Bauteilen sind in vielfältigen Ausführungen bekannt.
Eine Bauart von Dichtungen zum Abdichten eines Spalts zwischen benachbarten Bauteilen einer Strömungsmaschine, wie etwa einer Turbine, ist in EP 1378690 offenbart. Der abzudichtende Spalt (3) zwischen benachbarten Bauteilen (1, 2) trennt einen Bereich relativ hohen Drucks (4) von einem Bereich relativ niedrigen Drucks (5). Diese Dichtung ist in einem von zwei parallelen Dichtflächen (9) der benachbarten Bauteile (1, 2) und einem sich dazu senkrecht erstreckenden Abstützbereich (11) begrenzten Raum, der Teil des die beiden Bauteile (1, 2) trennenden Spalts (3) ist, angeordnet. Der Dichtungskörper selbst basiert im Querschnitt auf einer C-förmigen Grundform (siehe Fig. 3 jenes Dokuments), dessen Außenflächen einen Fluiddurchtritt verhindernde Kontaktpunkte (8) zu den angrenzenden Dicht- (9) und Stützflächen (11) bilden. Die C-förmige Grundform kann verschiedene Ausprägungen besitzen, beispielsweise in Form nach außen gebogener Endabschnitte (15), welche dann als Kontaktflächen (8) zu den angrenzenden Dichtflächen (9) fungieren (siehe Fig. 1, 2, 5). Der offene Teil der C-förmigen Grundform ist jeweils dem Bereich relativ hohen Drucks zugewandt. Allen Querschnittsformen dieser bekannten Dichtung ist gemeinsam, dass sie jeweils drei an den Bauteilen (1, 2) anliegende Kontaktbereiche (8) aufweisen, wobei der an der Stützfläche (11) anliegende Kontaktbereich (8) sich auf der Niederdruckseite der Dichtungsanordnung befindet.
Der Dichtungskörper ist so dimensioniert, dass er unter Vorspannung in den von den Dicht- und Stützflächen begrenzten Raum eingelegt ist. Bei einer beispielsweise thermisch bedingten Erweiterung des Spalts zwischen den Bauteilen (1) und (2) weitet sich der federelastische Dichtungskörper in dem Bereich der Profilöffnung (14) gleichermaßen und erhält damit den Kontakt (8) zu den Dichtflächen (9) aufrecht. Umgekehrt wird bei einer thermisch bedingten Verengung des Spalts senkrecht zu den gegenüberliegenden Dichtflächen (9) der Dichtungskörper (6) derart verformt, dass sich die Profilöffnung (14) zwischen den Endabschnitten (15) verringert.
Diese bekannte Dichtung ist nur für die Abdichtung ringförmig verlaufender Dichtspalte geeignet, und der Dichtungskörper (6) selbst ist als Ring oder Ringsegment ausgebildet. Nur diese ringförmige Form verleiht dem Dichtungskörper (6) eine hinreichende Stabilität gegen Verkanten. Ein Verkanten des Dichtungskörpers (6), das heißt, ein Verdrehen desselben innerhalb des Dichtungsspalts (3), so dass beispielsweise die Profilöffnung (14) sich einer Dicht- oder Stützfläche (9, 11) zuwendet, würde die Abdichtfunktion praktisch aufheben. Zumindest wäre der Dichtungskörper (6) in verkantetem Zustand nicht mehr in der Lage, auseinandertriftenden Dichtflächen (9) durch Aufspreizen der Profilöffnung (14) zu folgen.

Neben diesen vorgenannten C-Dichtungen sind auch sogenannte E-Dichtungen bekannt, wie sie beispielsweise in CH 699066 beschrieben sind. Obgleich diese Gattung von Dichtungen eine höhere Flexibilität als C-Dichtungen aufweist und auch darüber hinaus über eine Reihe von vorteilhaften Anwendungseigenschaften verfügt, ist deren Herstellung doch vergleichsweise aufwändig. Auch unterliegen sie bei nicht ringförmigen Anwendungen der Gefahr des Verkantens und damit eines Verlusts ihrer Dichtwirkung.

Gegenstand der Druckschrift DE 3923988 ist eine Dichtungsanordnung zum Abtrennen zweier über einen Ringspalt zwischen zwei Bauteilen verbundene Räume mit unterschiedlichen statischen Drücken. Zur Erzielung einer ausreichenden Radialanpressung der Dichtflächen an die spaltbegrenzenden Oberflächen besitzt diese Dichtungsanordnung in einem der Bauteile einen radial erweiterten Spaltabschnitt zur Aufnahme eines Dichtrings. Dieser mit einer U-förmigen Querschnittsform ausgebildete Dichtring besteht aus einer elastischen Armierung, umschlossen von einer elastomeren Ummantelung mit radial äusseren und inneren sich in Umfangsrichtung erstreckenden Dichtflächen, welche sich jeweils an den gegenüberliegenden Spaltbegrenzungsflächen elastisch abstützen. Indem die Dichtringschenkel mit leichter konischer Spreizung angeformt sind, erhöht die Druckdifferenz zusätzlich deren Radialanpressung.

### Darstellung der Erfindung

Hier will die Erfindung Abhilfe schaffen. Der Erfindung, wie sie in den Ansprüchen gekennzeichnet ist, liegt die Aufgabe zugrunde, eine Dichtung bereitzustellen, die die vorgenannten Nachteile vermeidet.

Erfindungsgemäß wird die Aufgabe durch ein Dichtungselement mit den Merkmalen des unabhängigen Patentanspruchs 1.

Ein Dichtungselement zur Verminderung von Leckströmungen innerhalb eines Spaltes zwischen zwei benachbarten Bauteilen, insbesondere thermisch belasteten Bauteilen einer Strömungsmaschine, bestehend aus einem länglichen und zumindest in einer Querrichtung zu seiner Längserstreckung elastisch verformbaren Dichtungskörper, welcher ein einseitig offenes Querschnittsprofil besitzt, das mit wenigstens zwei Kontaktbereichen an den benachbarten Bauteilen anliegt.Der Dichtungskörper besitzt ein wenigstens annähernd U-förmiges Querschnittsprofil, wobei im Betriebszustand jeder der beiden Schenkel des U-Profils einen Kontaktbereich zu einem der benachbarten Bauteile ausbildet, und wobei wenigstens einer der beiden Schenkel elastisch verformbar ist. In den U-förmigen Dichtungskörper ist wenigstens ein Federelement eingelegt, welches eine Spreizkraft auf die Schenkel des U-Profils ausübt.
Das Dichtungselement hat eine Anzahl separater Federelemente, die innerhalb des Dichtungskörpers hintereinander angeordnet sind. Dies bietet die Möglichkeit, über die Länge des Dichtungselements dessen Eigenschaften, wie etwa Anpresskraft, Deformationsverhalten, zu variieren.

Gemäß einer besonders bevorzugten Ausführungsart ist das Federelement dabei als ein V-förmiger Profilkörper ausgebildet, dessen offene Schenkelenden eine Spreizkraft auf die offenen Schenkelenden des Dichtungskörpers ausüben.

Die Fixierung des Federelements innerhalb des Dichtungskörpers kann vorzugsweise formschlüssig erfolgen, beispielsweise durch Einarbeitung einer in Längsrichtung verlaufenden Nut oder eines rippenartigen Vorsprungs an den offenen Schenkelenden des Dichtungskörpers, in die das Federelement formschlüssig einrastet.

Eine Dichtungsanordnung zur Verminderung von Leckströmungen innerhalb eines Spaltes zwischen zwei benachbarten Bauteilen, insbesondere thermisch belasteten Bauteilen einer Strömungsmaschine, welcher Spalt einen Endes an einen Raum relativ hohen Drucks und anderen Endes an einen Raum relativ niedrigen Drucks angrenzt, und von einer ersten Oberfläche des ersten Bauteils und einer zu der ersten Oberfläche parallel verlaufenden zweiten Oberfläche des zweiten Bauteils begrenzt wird, wobei wenigstens eine Oberfläche eines der Bauteile mit einer Nut zur Aufnahme eines elastisch verformbaren Dichtungselements ausgerüstet ist, zeichnet sich erfindungsgemäß dadurch aus, dass das Dichtungselement einen länglichen Dichtungskörper mit einem wenigstens annähernd U-förmigen Querschnittsprofil mit einer Basisfläche und zwei davon abgehenden Schenkeln besitzt, wobei im Betriebszustand jeder der beiden Schenkel des U-Profils einen Kontaktbereich zu einer der Oberflächen der benachbarten Bauteile ausbildet, und wobei wenigstens einer der beiden Schenkel senkrecht zu seiner Längserstreckung elastisch verformbar ist.

Gemäß einer vorteilhaften Ausführungsart ist der Dichtungskörper so in der Aufnahmenut angeordnet, dass in entspanntem Zustand ein Schenkel derart aufgespreizt ist, dass er die Nut überragt.

Indem der U-förmige Dichtungskörper so in die Aufnahmenut eingelegt ist, dass seine offene Seite dem Raum relativ hohen Drucks zugewandt ist, unterstützt der Fluiddruck den Anpressdruck des Dichtelements an die Bauteile und damit dessen Dichtwirkung.

Der wesentliche Vorteil des erfindungsgemäßen Dichtungselements und der Dichtungsanordnung liegt in ihrer leichten Herstellbarkeit und ihrer großen Zuverlässigkeit hinsichtlich einer gleichbleibenden Dichtwirkung auch über lange Zeiträume hinweg.

Weitere Ausführungsarten der Erfindung sowie deren vorteilhafte Wirkungen sind Gegenstand der abhängigen Ansprüche und der nachfolgenden Beschreibung konkreter Ausführungsbeispiele anhand der angefügten Zeichnungen.

### Kurze Beschreibung der Figuren

Bevorzugte Ausführungsbeispiele der Erfindung sind in den nachfolgenden Figuren näher dargestellt und beschrieben. Alle für das unmittelbare Verständnis der Erfindung nicht wesentlichen Elemente sind fortgelassen worden. Gleiche Elemente sind in den verschiedenen Figuren mit den gleichen Bezugszeichen versehen.

Es zeigen
- Fig. 1: eine erfindungsgemäße Dichtungsanordnung in perspektivischer Darstellung
- Fig. 2: die erfindungsgemäße Dichtungsanordnung in Schnittdarstellung
- Fig. 3: Dichtungsanordnung in bestimmungsgemäßem Gebrauch
- Fig. 4: eine Ausführungsart eines Dichtungselements gemäß der Erfindung.

### Wege zur Ausführung der Erfindung

Ein bevorzugtes Anwendungsgebiet eines erfindungsgemäßen Dichtungselements (1) sowie einer damit ausgerüsteten Dichtungsanordnung kann eine Flanschverbindung an einer Gasturbine sein, beispielsweise ein Kreuzflansch, wie er in bestimmten Bauarten von Gasturbinen zur Verbindung des Brennkammer- und des Gasturbinengehäuses eingesetzt wird. Aufgrund der in diesen Bereichen auftretenden hohen und wechselnden thermischen Beanspruchungen der Gehäusebauteile können an den dortigen Flanschverbindungen infolge vorübergehender oder dauernder mechanischer Verformungen lokal Leckströmungen auftreten, die zu Verlusten von Verdichterluft und zusätzlicher thermischer Beanspruchung der beteiligten Gehäusebauteile führen.

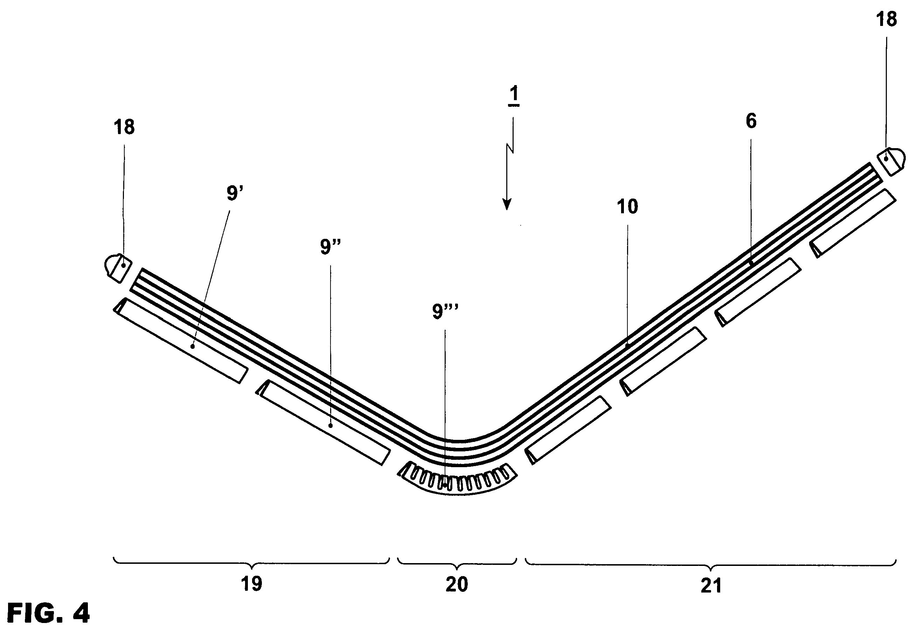

In vorteilhafter Weise kann hier an gefährdeten Stellen, entweder bei Neuanlagen aber auch an bereits betriebenen Gasturbinenanlagen, in letzterem Falle beispielsweise im Rahmen von Reparatur- oder Wartungsarbeiten, mittels der erfindungsgemäßen Dichtungsanordnung Abhilfe geschaffen werden. Zu diesem Zwecke wird bei abgenommenem Gehäuseteil in einer der freiliegenden Kontaktflächen 4 oder 5 des Gehäuseflansches innerhalb des durch Leckströmung gefährdeten Bereichs eine Aufnahmenut 7 für ein Dichtelement 1 eingefräst. Wie in der Prinzipskizze der Fig. 1 dargestellt, kann der Verlauf der Nut 7 geradlinig sein. Dies ist indes nicht zwingend. Die Aufnahmenut 7 kann auch vorgegebenen Konturen folgen und dabei einen nicht geradlinigen Verlauf einnehmen. Eine Ausführungsart eines derartigen Dichtelements ist in Fig. 4 beispielhaft dargestellt.

Fig. 1 zeigt ein Bauteil 2, welches beispielsweise die Kontaktfläche eines solchen Flansches sein kann, mit einer Oberfläche 4, der Kontaktfläche zu dem komplementären Flansch des anderen Gehäusebauteils. In die Oberfläche 4 ist eine rechteckige Nut 7 eingefräst. Diese Nut 7 dient der Aufnahme des länglichen Dichtelements 1. Die Breite der Nut 7 ist dabei so dimensioniert, dass das Dichtelement 1 mit Spiel eingelegt werden kann und dieses Spiel auch bei unterschiedlichen thermischen Einsatzbedingungen bestehen bleibt.

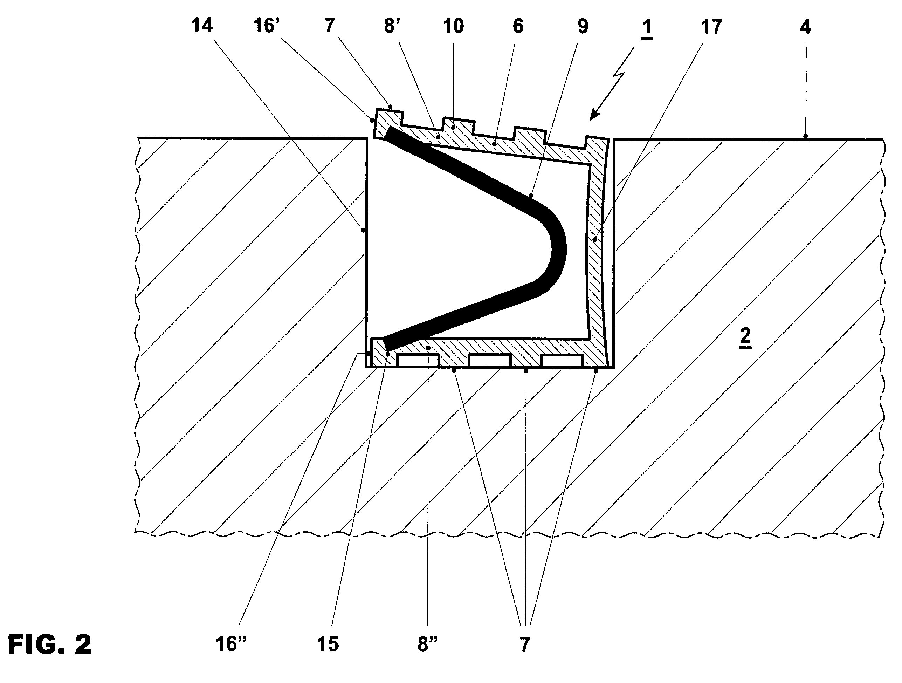

Wie insbesondere in Verbindung mit Fig. 2 zu erkennen ist, umfasst das Dichtungselement 1 einen länglichen Dichtungskörper 6 mit einem U-förmigen Querschnittsprofil, bestehend aus einer Basis 17 und zwei davon abstehenden Schenkeln 8' und 8". Gegenüber der Basis 17 nehmen die Schenkel 8' und 8" einen Winkel ≥ 90° ein. Vorzugsweise sind die Schenkel 8' und 8" leicht nach außen gespreizt.

Die Außenseite der Schenkel 8', 8" ist mit Dichtrippen 10 ausgestattet, die sich über die gesamte Länge des Dichtungskörpers 6 erstrecken und die Kontaktflächen 7 zu den Bauteilen 2 und 3 bilden. Die Dichtrippen 10 erhöhen die mechanische Stabilität des Dichtungskörpers 6, erfüllen die Funktion eines Labyrinths und fungieren darüber hinaus, sofern erforderlich, als Barriere für eine eventuell aufgebrachte Dichtungspaste.

Als Material für den Dichtungskörper 6 eignet sich insbesondere Stahlguss. Innerhalb des Dichtungskörpers 6 sind ein oder mehrere Federelemente 9 angeordnet, deren Zweck es ist, eine Spreizkraft auf die Schenkel 8', 8" des Dichtungskörpers 6 auszuüben, so dass die Schenkel 8', 8" gegenüber der Basisfläche 17 einen Winkel von > 90° einnehmen, so dass der Dichtungskörper 6 im Bereich der offenen Schenkelenden 16 aus der Aufnahmenut 7 herausragt. Als geeignet haben sich Federelemente 9 mit einem V-förmigen Profil erwiesen, hergestellt aus einer nickelbasierten Superlegierung. Im Bereich der offenen Schenkelenden 16', 16" ist der Dichtungskörper 6 auf seiner Innenseite mit jeweils einer längsverlaufenden Nut 15 ausgestattet, in welche das Federelement 9 formschlüssig einrastet und damit zuverlässig innerhalb des Dichtungskörpers 6 fixiert ist. Anstelle einer Nut 15 ist an dieser Stelle auch eine aufgebrachte Wulst oder eine Reihe von Vorsprüngen zum formschlüssigen Abstützen des Federelements 9 denkbar.

Es ist Sache des einschlägigen Fachmanns, durch eine geeignete Auslegung und Abstimmung der Parameter von Dichtungskörper 6 und Federelement 9 ein Dichtungselement 1 mit einer den Anforderungen des konkreten Einsatzfalls genügenden Anwendungseigenschaften zu schaffen.

Fig. 3 zeigt eine erfindungsgemäße Dichtungsanordnung während des bestimmungsgemäßen Gebrauchs. Bauteil 2 und Bauteil 3 sind fluiddicht zusammengefügt, um einen Raum 12 relativ hohen Drucks und/oder hoher Temperatur und einen Raum 11 relativ niedrigen Drucks und/oder niedriger Temperatur fluiddicht voneinander zu trennen. Bei dem Raum 12 kann es sich dabei um einen Gaspfad in einer Gasturbine handeln, in dem Prozessgase mit Drücken von über 15 bar und Temperaturen von über 400°C strömen, und bei dem Raum 11 um die Atmosphäre außerhalb des Gehäuses am Aufstellungsort der Gasturbine. Die Bauteile 2 und 3 sind Komponenten des Turbinengehäuses, die mittels einer Flanschverbindung dichtend aneinandergefügt sind, wobei die Oberflächen 4 und 5 die Kontaktflächen des zusammengefügten Flansches darstellen. Beim Zusammenpressen der Kontaktflächen 4 und 5 wird der überstehende Schenkel 8' des Dichtungskörpers 6 in die Aufnahmenut 7 zurückgedrängt, bis die Rippen 10 mit der Oberfläche 4 fluchten.

Aufgrund der enormen mechanischen und thermischen Beanspruchungen des Turbinengehäuses und daraus resultierender Deformationen können lokal Spalte 13 entstehen, in deren Folge sich eine Leckströmung von heißem Fluid aus dem Gaspfad 12 in die Umgebung 11 der Turbine ausbildet. Indem das Dichtungselement 1 einer Spalterweiterung 13 infolge einer Gehäusedeformation zu folgen vermag, indem Schenkel 8' des Dichtungskörpers 6 sich aus der Aufnahmenut 7 erhebt, ohne den Kontakt 7 zum benachbarten Bauteil 3 zu verlieren, bleibt die Dichtwirkung erhalten und eine unerwünschte Leckströmung durch den Spalt 13 wird sicher vermieden. Da der Dichtungskörper 6 derart in die Nut 7 eingelegt ist, dass sein offenes Ende dem Gebiet relativ hohen Drucks 12 zugewandt ist, erhöht sich zusätzlich der Anpressdruck der Kontaktflächen 7 des Dichtungskörpers 6 an die Oberflächen 4 und 5.

In Fig.4 sind in einer Draufsicht die verschiedenen Komponenten des erfindungsgemäßen Dichtungselements 1 gezeigt. Der U-förmige Dichtungskörper 6 setzt sich gemäß der hier dargestellten Ausführungsart aus zwei geradlinigen Abschnitten 19 und 21 und einem diese Abschnitte verbindenden bogenförmigen Abschnitt 20 zusammen. Auf den Außenflächen des Dichtungskörpers 6 sind die zwischen dessen Enden längs verlaufenden Rippen 10 zu erkennen. An den gegenüberliegenden Enden befinden sich Endstücke 18, die ein Umströmen des in die Aufnahmenut 7 eingelegten Dichtungselements 1 an dessen beiden Längsenden verhindern sollen. Sie schließen dichtend den Zwischenraum zwischen den Längsenden des Dichtungselements 1 und jenen der Aufnahmenut 7 ab. Die Endstücken 18 können ein integraler Bestandteil des Dichtungskörpers 6 sein oder, wie in Fig. 4 dargestellt, als separate Segmente bereitgestellt werden, welche an den Längsenden des Dichtungskörpers 6 lediglich in die Aufnahmenut 7 eingelegt werden. Da das wenigstens eine Federelement 9 aus einem im Vergleich zum Dichtkörper 6 teueren Werkstoff, in der Regel einer nickelbasierten Stahllegierung, hergestellt ist, kann es von Vorteil sein, den Dichtungskörper 6 nicht durchgehend über seine gesamte Länge mit einem einzigen Federelement 9 zu bestücken, sondern mit einer Anzahl von kürzeren Federelementen 9', 9", 9"', die unter Freilassung eines mehr oder weniger grossen Zwischenabstands in dem Dichtungskörper 6 positioniert werden. Neben einer Kostenersparnis bietet diese Maßnahme darüber hinaus den Vorteil, dass, über die Länge des Dichtkörpers 6 verteilt, Federelemente 9', 9", 9'" mit unterschiedlichen Eigenschaften, beispielsweise unterschiedlicher Spreizkraftwirkung, eingesetzt werden können.

### Bezugszeichenliste

- 1: Dichtungselement
- 2: erstes Bauteil
- 3: zweites Bauteil
- 4: Dichtfläche des ersten Bauteils
- 5: Dichtfläche des zweiten Bauteils
- 6: Dichtungskörper
- 7: Kontaktflächen zwischen Dichtkörper 6 und Dichtflächen 4, 5
- 8',8": Schenkel des U-Profils von 6
- 9: Federelement
- 10: Rippen auf den Außenseiten von 6
- 11: Raum relativ niedrigen Drucks und/oder Temperatur
- 12: Raum relativ hohen Drucks und/oder Temperatur
- 13: Spalt zwischen 4 und 5
- 14: Aufnahmenut in 2 oder 3
- 15: formschlüssige Arretierung für (9), z.B. Nut
- 16',16": Schenkelenden
- 17: Basis des U-Profils von 6
- 18: Endteil des Dichtungselements

## Patentansprüche

1. Dichtungselement (1), bestehend aus einem länglichen und zumindest in einer Querrichtung zu seiner Längserstreckung elastisch verformbaren Dichtungskörper (6), welcher Dichtungskörper (6) ein einseitig offenes Querschnittsprofil mit wenigstens zwei Kontaktbereichen (7) an benachbarten Bauteilen (2, 3) besitzt, und welcher Dichtungskörper (6) ein U-förmiges Querschnittsprofil besitzt, wobei im Betriebszustand jeder der beiden Schenkel (8', 8") des U-Profils einen Kontaktbereich (7) zu einer der Oberfläche (4, 5) eines benachbarten Bauteteils (2, 3) ausbildet, und wobei wenigstens einer der beiden Schenkel (8', 8") senkrecht zu seiner Längserstreckung elastisch verformbar ist, indem in den Dichtungskörper (6) wenigstens ein Federelement (9) eingelegt ist, welches eine Spreizkraft auf die Schenkel (8', 8") des U-förmigen Dichtungskörpers (6) ausübt, **dadurch gekennzeichnet, dass** eine Anzahl von Federelementen (9) aufeinanderfolgend mit oder ohne Zwischenabstände in den Dichtungskörper (6) eingelegt ist, und die aufeinanderfolgenden Federelemente (9) ein unterschiedliches Deformationsverhalten aufweisen, insbesondere unterschiedliche Spreizkräfte auf den Dichtungskörper (6) ausüben.

2. Dichtungselement nach Anspruch 1, **dadurch gekennzeichnet, dass** das wenigstens eine Federelement (9) ein V-förmiger Profilkörper ist, dessen offene Schenkelenden (16) die Spreizkraft auf den Dichtungskörper (6) ausüben.

3. Dichtungselement nach Anspruch 1 oder 2, **dadurch gekennzeichnet, dass** das Federelement (9) unter Vorspannung in den Dichtungskörper (6) eingelegt ist.

4. Dichtungselement nach einem der Ansprüche 1 bis 3, **dadurch gekennzeichnet, dass** das Federelement (9) in etwa die gleiche Länge wie der Dichtkörper (6) besitzt und sich wenigstens annähernd über dessen gesamte Länge erstreckt.

5. Dichtungselement nach einem der Ansprüche 1 bis 4, **dadurch gekennzeichnet, dass** das wenigstens eine Federelement (9) formschlüssig in dem Dichtungskörper (6) fixiert ist.

6. Dichtungselement nach Anspruch 5, **dadurch gekennzeichnet, dass** der U-förmige Dichtungskörper (6) im Bereich seiner offenen Schenkelenden (16) eine in Längsrichtung verlaufende Nut (15) zum formschlüssigen Einrasten der Federelemente (9) aufweist.

7. Dichtungselement nach einem der vorhergehenden Ansprüche, **dadurch gekennzeichnet, dass** zumindest das Federelement (9) aus einer Superlegierung, beispielsweise einer Nickelbasis-Superlegierung, besteht.

8. Dichtungselement nach Anspruch 1, **dadurch gekennzeichnet, dass** der Dichtungskörper (6) zumindest in den Kontaktbereichen (7) zu den Bauteilen (2, 3) mit rippenartigen Vorsprüngen (10) ausgestattet ist.

9. Dichtungselement nach Anspruch 8, **dadurch gekennzeichnet, dass** die rippenartigen Vorsprünge (10) sich zwischen den Längsenden des Dichtungskörpers (6) im Wesentlichen parallel zueinander erstrecken.

## Claims

1. Seal element (1), consisting of an elongate seal body (6) which can be deformed elastically at least in a transverse direction to its longitudinal extent, which seal body (6) has a cross-sectional profile which is open on one side with at least two contact regions (7) on adjacent components (2, 3), and which seal body (6) has a U-shaped cross-sectional profile, each of the two limbs (8', 8'') of the U-profile forming a contact region (7) in the operating state with one of the surfaces (4, 5) of an adjacent component (2, 3), and at least one of the two limbs (8', 8'') being elastically deformable perpendicularly with respect to its longitudinal extent, by at least one spring element (9) being inserted into the seal body (6), which spring element (9) exerts a spreading force on the limbs (8', 8'') of the U-shaped seal body (6), **characterized in that** a number of spring elements (9) are inserted into the seal body (6) so as to follow one another with or without intermediate spacings, and the spring elements (9) which follow one another have a different deformation behaviour, in particular exert different spreading forces on the seal body (6).

2. Seal element according to Claim 1, **characterized in that** the at least one spring element (9) is a V-shaped profile body, the open limb ends (16) of which exert the spreading force on the seal body (6).

3. Seal element according to Claim 1 or 2, **characterized in that** the spring element (9) is inserted into the seal body (6) under prestress.

4. Seal element according to one of Claims 1 to 3, **characterized in that** the spring element (9) has approximately the same length as the sealing body (6) and extends at least approximately over its entire length.

5. Seal element according to one of Claims 1 to 4, **characterized in that** the at least one spring element (9) is fixed in the seal body (6) in a positively locking manner.

6. Seal element according to Claim 5, **characterized in that**, in the region of its open limb ends (16), the U-shaped seal body (6) has a groove (15) which runs in the longitudinal direction for latching of the spring elements (9) in a positively locking manner.

7. Seal element according to one of the preceding claims, **characterized in that** at least the spring element (9) consists of a superalloy, for example a nickel-based superalloy.

8. Seal element according to Claim 1, **characterized in that** the seal body (6) is equipped with rib-like projections (10) at least in the contact regions (7) with the components (2, 3).

9. Seal element according to Claim 8, **characterized in that** the rib-like projections (10) extend substantially parallel to one another between the longitudinal ends of the seal body (6).

## Revendications

1. Elément d'étanchéité (1) se composant d'un corps d'étanchéité (6) allongé et déformable élastiquement au moins dans une direction transversale à son extension longitudinale, lequel corps d'étanchéité (6) possède un profilé de section transversale ouverte unilatéralement avec au moins deux zones de contact (7) sur des composants voisins (2, 3), et lequel corps d'étanchéité (6) possède un profilé de section transversale en forme de U, dans lequel dans l'état de fonctionnement chacune des deux branches (8', 8") du profilé en U forme une zone de contact (7) avec une des surfaces (4, 5) d'un composant voisin (2, 3) et dans lequel au moins une des deux branches (8', 8") est élastiquement déformable perpendiculairement à son extension longitudinale, par le fait qu'au moins un élément de ressort (9)est intégré dans le corps d'étanchéité (6) et exerce une force d'expansion sur les branches (8', 8") du corps d'étanchéité en forme de U (6), **caractérisé en ce que** plusieurs éléments de ressort (9) sont intégrés à la suite l'un de l'autre avec ou sans intervalles dans le corps d'étanchéité (6), et les éléments de ressort (9) successifs présentent un comportement de déformation différent, en particulier exercent des forces d'expansion différentes sur le corps d'étanchéité (6).

2. Elément d'étanchéité selon la revendication 1, **caractérisé en ce que** ledit au moins un élément de ressort (9) est un corps profilé en forme de V, dont les extrémités de branches ouvertes (16) exercent la force d'expansion sur le corps d'étanchéité (6).

3. Elément d'étanchéité selon la revendication 1 ou 2, **caractérisé en ce que** l'élément de ressort (9) est intégré sous précontrainte dans le corps d'étanchéité (6).

4. Elément d'étanchéité selon l'une quelconque des revendications 1 à 3, **caractérisé en ce que** l'élément de ressort (9) possède sensiblement la même longueur que le corps d'étanchéité (6) et s'étend au moins approximativement sur toute la longueur de celui-ci.

5. Elément d'étanchéité selon l'une quelconque des revendications 1 à 4, **caractérisé en ce que** ledit au moins un élément de ressort (9) est fixé par emboîtement dans le corps d'étanchéité (6).

6. Elément d'étanchéité selon la revendication 5, **caractérisé en ce que** le corps d'étanchéité en forme de U (6) présente dans la région de ses extrémités de branches ouvertes (16) une rainure (15) s'étendant en direction longitudinale pour l'encliquetage par emboîtement des éléments de ressort (9).

7. Elément d'étanchéité selon l'une quelconque des revendications précédentes, **caractérisé en ce qu'**au moins l'élément de ressort (9) se compose d'un superalliage, par exemple d'un superalliage à base de nickel.

8. Elément d'étanchéité selon la revendication 1, **caractérisé en ce que** le corps d'étanchéité (6) est doté de saillies en forme de nervures (10) au moins dans les zones de contact (7) avec les composants (2, 3).

9. Elément d'étanchéité selon la revendication 8, **caractérisé en ce que** les saillies en forme de nervures (10) s'étendent essentiellement parallèlement les unes aux autres entre les extrémités longitudinales du corps d'étanchéité (6).
